# EUROPEAN PATENT SPECIFICATION

(11) **EP 3 902 303 B1**
(45) Date of publication and mention of the grant of the patent: **04.05.2022**
(21) Application number: 20170551.4
(22) Date of filing: 21.04.2020
(51) Int. Cl.: H04W 4/80, H04W 12/06

(54) **METHOD FOR ENABLING ZERO TOUCH CONNECTIVITY (ZTC) ACCESS IN A COMMUNICATION SYSTEM**
VERFAHREN ZUR ERMÖGLICHUNG VON BERÜHRUNGSLOSEM KONNEKTIVITÄTSZUGRIFF IN EINEM KOMMUNIKATIONSSYSTEM
PROCÉDÉ POUR PERMETTRE UN ACCÈS VIA UNE CONNECTIVITÉ SANS CONTACT (ZTC) DANS UN SYSTÈME DE COMMUNICATION

(43) Date of publication of application: 27.10.2021
(73) Proprietor: Deutsche Telekom AG, 53113 Bonn (DE)
(72) Inventor: HELLEBRAND, Katja, 61118 Bad Vilbel (DE); HENZE, Thomas, 53173 Bonn (DE); AMEND, Markus, 63667 Nidda (DE); BOGENFELD, Eckard Dr., 67316 Carlsberg (DE)
(74) Representative: Vossius & Partner Patentanwälte Rechtsanwälte mbB

(56) References cited:
- EP-A1- 2 840 828
- US-A1- 2010 027 469
- US-A1- 2011 167 440
- US-A1- 2014 040 975

## Description

### Field of the invention

The invention relates to a method for enabling zero touch connectivity (ZTC) access in a communication system.

### Background

Nowadays, people using smartphones or other mobile devices are typically connected to the internet via the cellular network of a certain provider or its roaming partners. This provider normally takes care of all aspects of internet connectivity albeit secure identification, terms of condition management, secure connection management, billing, etc, all fulfilling legal requirements for telecommunication services. These "people" or users are referred as mobile customers.

Mobile customers also have the option to connect to a WiFi network of their choice, which then provides the connectivity to the internet, whereas the mobile network can in parallel still deliver voice (telephony) and SMS service.

Major benefits of using WiFi networks for internet connectivity instead of using mobile networks are cost saving (for volume-based billing data plans), better performance (typically indoors) or possibility to directly connect to local devices in a private home or company network.

The usage of mobile devices for consuming services e.g. e-Mail, messenger, music, video, games, app etc. is more important than ever.

### Technical problem

However, today customers are confronted with different available networks and it is necessary for them to be involved in managing connectivity to experience the services they really want to use.

This has an inconvenience to the customer's experience and may give rise to several problems. For example, when customers are confronted with bad connectivity experience - such as: slow Wi-Fi or cellular connectivity, connection drops, or the service is stalling and does not work, the connection is disrupted or is bad - the customers have to manage their connectivity, e.g. by switching the WiFi button on/off to stay connected and use their services.

As another example, in situations when several networks are available, e.g. several WiFis, customers do not know which WiFi is the best (i.e. in terms of quality, performance). Typically, customers are overwhelmed by decisions they cannot even make because they have no knowledge about quality or safety of available networks.

Existing solutions like Connectivity Steering Apps or embedded device functions help to make the current usage behavior better and reduce customer involvement but a manual engagement is still required.

Another problem is that the number of WiFi networks is typically very limited, especially abroad. One particular case is the third party WiFi networks that do not have any relation with the cellular provider, hence excluding operator or partner WiFis which allow the customer a seamless access.

A key drawback of using third party WiFi networks today is that the user is on his/her own, because in this use case the user is not in the role of a mobile customer. Besides, significant manual interaction is required before the connection to the internet is established and applications can be used. Some examples of these manual interactions for enjoying WiFi connectivity, require the user to perform one or more of the following actions:
- locate a suitable WiFi network,
- decide whether it is secure enough for use (mostly based on "stomach feeling" or on other people recommendations),
- login to the network - this often requires inquiring for credentials (a social interaction) and/or registering via a mandatory landing page, which is very common because the WiFi provider wants to pass on legal responsibilities to the user who must explicitly comply to respective terms and conditions,

- pay money for the use of the WiFi network,
- pay with "attention", e.g. via advertisement pages popping up automatically,
- pay with personal data, which are retrieved via the landing page, typically name, surname and email-address, but sometimes even more.

Despite the above-mentioned drawbacks, many customers still decide to use such WiFi networks, mainly for cost reasons - as data volume-based billing still prevails. The situation becomes even more distinct abroad where cellular connectivity is typically more expensive or otherwise limited.

With the rise of data flat rates, more and more customers with such data plans refrain from using WiFi at all. They turn the WiFi setting in their device OFF, in order to not be bothered at all with the hassle and also to save battery.

However, there exists a problem in that these customers could often enjoy a better connectivity than the one they currently have. This occurs whenever there is a WiFi around that could deliver the user a better performance than the used cellular network, typically LTE but partly falling back to 3G or even EDGE.

At the same time the cellular service provider is missing out on the opportunity to offload (flat rate) customers' traffic to a quality WiFi network and thereby saving cellular network cost.

US 2010/027469 A1 discloses system(s) and method(s) for a femto cell service framework for purchase of femtocell equipment and service and customer support thereof. A point of sale (POS) platform enables purchase of femtocell equipment based on a set of eligibility criteria. POS also allows purchase of add-on services. Direct fulfillment and post-sale transactions such as returns and equipment replacement are also provided. An account management service enables femtocell equipment and service self-care or through customer representatives. Configuration of service account and monitoring of account status is provided. Customer care architecture also enables remote troubleshooting of purchased equipment. Remote troubleshooting includes diagnosis and related manipulation of purchased equipment.

In view of the above, it is an object of the present invention to provide Zero Touch Connectivity (ZTC) so that users do not have to manually engage for connectivity steering.

It is another object of the present invention to provide automatic online connectivity to a user with the best available connectivity everywhere and at any time without the burden of manual engagement, regardless it is a WiFi or cellular connection, or both together.

It is still another object of the present invention to improve the performance aspect of an available cellular network where a certain WiFi network can deliver a significantly better performance compared to the available cellular network. Such WiFi networks may be any third party WiFi networks without any relation to the cellular provider, thus excluding operator or partner WiFis which allow the customer seamless access.

According to still another object, the invention aims at providing zero touch connectivity, namely zero touch automatic access, to third party WiFi networks, thereby providing the mobile customer with the possibility to always enjoy the best possible connectivity in terms of signal strength, data rate, or the like.

According to another object, in cellular, WiFi or both bearers together, the customer does not need to engage manually.

According to another object, a mobile costumer may seamlessly use third party WiFi networks, even though the mobile customer has no contractual relationship "on paper" between the mobile service provider and the existing WiFi provider.

### Summary

The above object is achieved by the features of the independent claims.

According to a first aspect, the invention provides a method for enabling Zero Touch Connectivity, ZTC, access in a communication system, wherein the system comprises a User Equipment, UE, a ZTC operator backend associated with an Operator IT system, wherein the ZTC operator backend comprises and supports the following functions: Entitlement, ET, server, Subscriber Credential Manager, SCM; and a Subscriber Data Platform, SDP, the method comprising the steps of: registering, from the UE, to a cellular and/or WiFi network by using a subscriber identity, ID, wherein the subscriber ID is associated with a ZTC operator backend an Operator IT system; determining, at the UE, address information to establish a connection with the ZTC operator backend associated the subscriber ID, and establishing a connection with the ZTC operator backend using the determined address information; requesting, from the UE to the ET server, for ZTC status information associated with the subscriber ID; retrieving, at the ET server, the ZTC status information associated with the subscriber ID, from the associated responsible Operator IT system, wherein the ZTC status information comprises a ZTC status flag and profile information, wherein if the ZTC status flag is active indicates that the subscriber ID is subscribed to ZTC and if the ZTC status flag is inactive indicates that the subscriber ID is not subscribed to ZTC, and wherein the ZTC profile information indicates whether the subscriber ID is authorized to use one or a combination of ZTC service functions on the UE; returning, from the ET server to the UE, the requested ZTC status information; if the ZTC status flag is set active, setting, at the UE, an auto-connect switch to ON, if the ZTC status flag is set inactive, or if the ZTC status flag is set active but the ZTC status flag was already set active before and the subscriber ID had manually set earlier the auto-connect switch as OFF, the method is terminated; sending, from the UE to the SCM, a set of WiFi credentials, wherein the WiFi credentials are known and stored in the UE, and requesting synchronization with the SDP; synchronizing, from the SCM to the SDP, by storing new or updating the set of WiFi credentials as received by the UE and retrieving the synchronized set of WiFi credentials; sending, from the SCM to the UE, the synchronized set of WiFi credentials; receiving, updating and storing, at the UE, the synchronized set of WiFi credentials.

According to a preferred aspect of the invention, the UE and ZTC operator backend further support the functions of crowd sourcing, CS, Network Data Analytics Platform, NDAP, data base, and predictive steering, PS, information, the method further comprising: collecting and compiling, at the UE's current location, data of WiFi and/or cellular networks, wherein the data comprises one or a combination of the following quality parameters associated with the WiFi and/or cellular networks: signal strength, current network performance, current user experience estimation; sending, from the UE to the CS, the compiled data; updating, from the CS to the NDAP data base, the compiled data as received by the UE; sending, from the CS to the UE, an acknowledgment receipt and indicating if the update of the data has been successful; checking, at the UE, whether valid PS information is locally available, wherein the PS information comprises a validity timer indicating a time until which the PS information is valid for a specific location and/or area, and in the case that there is no valid PS information at the UE: requesting for new PS information to the PS function; accessing, retrieving and compiling, from the PS function to the NDAP data base, a set of PS information associated with the UE's current location and/or area, wherein the set of PS information contains a list of WiFi and/or cellular networks with related quality parameter predictions and an associated validity timer, respectively, returning, from the PS function to the UE, the set of PS information associated with the UE's current location and/or area; storing, at the UE, the set of PS information and verifying whether the cellular and/or Wifi networks to which the UE is currently registered are optimal, wherein a network is regarded as optimal if there is no other network with better quality parameter predictions; if the current cellular and/or WiFi network or networks is optimal, the following step is skipped, alternatively, if the current cellular and/or WiFi network or networks is not optimal, performing a new cellular and/or WiFi network registration or registrations to the network with the best quality parameter predictions.

According to a preferred aspect of the invention, performing a new cellular and/or WiFi network registration or registrations, comprises: using, at the UE, the stored PS information and set of WiFi credentials to decide which registration or registrations to perform; performing, from the UE to the CS, an update of current network performance data, wherein the update of current network performance data comprises: collecting and compiling, at the UE's current location, data of WiFi and/or cellular networks, wherein the data comprises one or a combination of the following quality parameters associated with the WiFi and/or cellular networks: signal strength, current network performance, current user experience estimation; sending, from the UE to the CS, the compiled data; updating, from the CS to the NDAP data base, the compiled data as received by the UE; sending, from the CS to the UE, an acknowledgment receipt and indicating if the update of the data has been successful.

According to a second aspect, the invention provides a communication system comprising a User Equipment, UE, a ZTC operator backend associated with an Operator IT system, wherein the ZTC operator backend comprises and supports the following functions: Entitlement, ET, server, Subscriber Credential Manager, SCM; and a Subscriber Data Platform, SDP, wherein: the UE is configured to register, to a cellular and/or WiFi network by using a subscriber identity, ID, wherein the subscriber ID is associated with a ZTC operator backend an Operator IT system; the UE is configured to determine address information to establish a connection with the ZTC operator backend associated the subscriber ID, and to establish a connection with the ZTC operator backend using the determined address information; the UE is configured to request to the ET server, ZTC status information associated with the subscriber ID; the ET server is configured to retrieve the ZTC status information associated with the subscriber ID, from the associated responsible Operator IT system, wherein the ZTC status information comprises a ZTC status flag and profile information, wherein if the ZTC status flag is active indicates that the subscriber ID is subscribed to ZTC and if the ZTC status flag is inactive indicates that the subscriber ID is not subscribed to ZTC, and wherein the ZTC profile indicates whether the subscriber ID is authorized to use one or a combination of ZTC service functions on the UE; the ET server is configured to return to the UE, the requested ZTC status information; if the ZTC status flag is set active, the UE is configured to set, an auto-connect switch to ON, if the ZTC status flag is set inactive, or if the ZTC status flag is set active but the ZTC status flag was already set active before and the subscriber ID had manually set earlier the auto-connect switch as OFF, the UE is configured to maintain the auto-connect switch as OFF; the UE is configured to send to the SCM, a set of WiFi credentials, wherein the WiFi credentials are known and stored in the UE, and requesting synchronization with the SDP; the SCM is configured to synchronize with the SDP, by storing new or updating the set of WiFi credentials as received by the UE and to retrieve the synchronized set of WiFi credentials; the SCM is configured to send to the UE, the synchronized set of WiFi credentials; the UE is configured to receive, update and store, the synchronized set of WiFi credentials.

According to a preferred aspect of the invention, the UE and ZTC operator backend further support the functions of crowd sourcing, CS, Network Data Analytics Platform, NDAP, data base, and predictive steering, PS, information, and wherein: the UE is configured to collect and compile, data of WiFi and/or cellular networks at the UE's current location, wherein the data comprises one or a combination of the following quality parameters associated with the WiFi and/or cellular networks: signal strength, current network performance, current user experience estimation; the UE is configured to send to the CS, the compiled data; the CS is configured to update to the NDAP data base, the compiled data as received by the UE; the CS is configured to send to the UE, an acknowledgment receipt indicating if the update of the data has been successful; the UE is configured to check whether valid PS information is locally available, wherein the PS information comprises a validity timer indicating a time until which the PS information is valid for a specific location and/or area, and in the case that there is no valid PS information at the UE: the UE is configured to request new PS information to the PS function; the PS function is configured to access the NDAP data base, retrieve and compile, a set of PS information associated with the UE's current location and/or area, wherein the set of PS information contains a list of WiFi and/or cellular networks with related quality parameter predictions and an associated validity timer, respectively, the PS function is configured to return to the UE, the set of PS information associated with the UE's current location and/or area; the UE is configured to store the set of PS information and to verify whether the cellular and/or WiFi networks to which the UE is currently registered are optimal, wherein a network is regarded as optimal if there is no other network with better quality parameter predictions; and, if the current cellular and/or WiFi network or networks is not optimal, the UE is configured to perform a new cellular and/or WiFi network registration or registrations to the network or networks with the best quality parameter predictions.

According to a preferred aspect of the invention, when a new cellular and/or WiFi network registration or registrations is performed: the UE is configured to use the stored PS information and set of WiFi credentials to decide which registration or registrations to perform; the UE is configured to perform to the CS, an update of current network performance data, wherein the UE is configured to: collect and compile, at the UE's current location, data of WiFi and/or cellular networks, wherein the data comprises one or a combination of the following quality parameters associated with the WiFi and/or cellular networks: signal strength, current network performance, current user experience estimation; send to the CS the compiled data; wherein the CS is configured to update to the NDAP data base, the compiled data as received by the UE, and to send, to the UE, an acknowledgment receipt indicating if the update of the data has been successful.

The invention is advantageous in that in cellular, WiFi or both bearers together, the customer does not need to engage manually.

The invention is also advantageous because a mobile costumer may seamlessly use third party WiFi networks, even though the mobile customer has no contractual relationship "on paper" between the mobile service provider and the existing WiFi provider.

Other aspects, features, and advantages will be apparent from the summary above, as well as from the description that follows, including the figures and the claims.

### Brief description of the drawings

In the drawings:
- FIG. 1: illustrates the architecture of a communication system according to an embodiment of the invention.
- FIG. 2: illustrates the message flow for subscribing to Zero Touch Connectivity (ZTC) in a communication system according to an embodiment of the invention.
- FIG. 3: illustrates the message flow for enabling Zero Touch Connectivity (ZTC) in a communication system according to an embodiment of the invention.
- FIG. 4: illustrates the message flow according to a preferred embodiment of the invention.
- FIG. 5: illustrates the message flow according to a further preferred embodiment of the invention.
- FIG. 6: illustrates the architecture and message flow according to a further preferred embodiment of the invention.
- FIG. 7: illustrates the architecture and message flow according to a further preferred embodiment of the invention.

### Detailed description of the invention

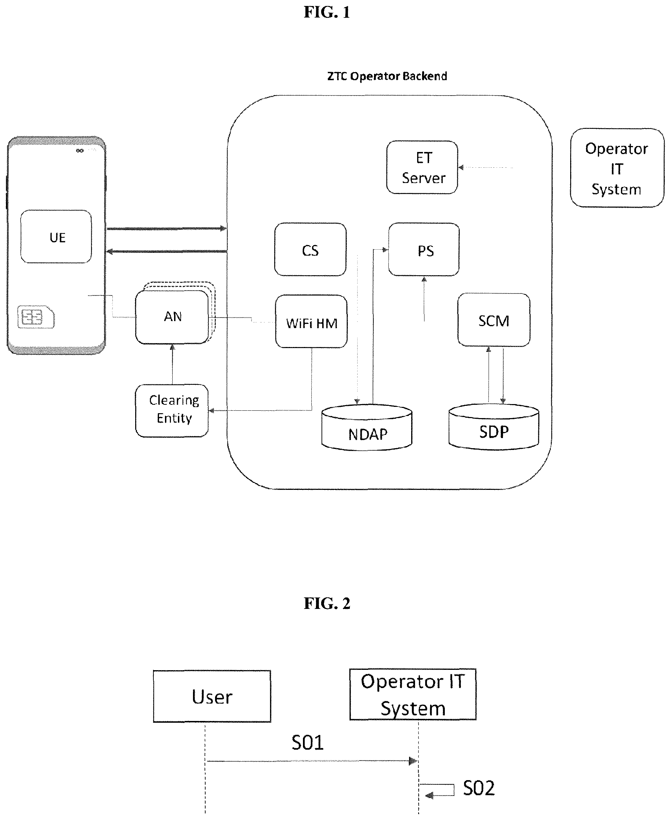

FIG. 1 shows the architecture of a communication system according to an embodiment of the invention. In detail FIG. 1 shows a User Equipment (UE) with connectivity to a ZTC operator backend. The ZTC operator backend is associated with an Operator IT system.

In FIG. 1, the UE and the ZTC operator backend may comprise and support several functions (only shown for the ZTC operator backend), as will be described later in detail. The system may further comprise Access Node (AN) that may provide connectivity between the UE and the ZTC operator backend as well as connectivity between the UE and an external Data Network (not shown) such as, for example, the Internet.

According to an embodiment of the invention, there is provided a method for subscribing to Zero Touch Connectivity in a communication system. FIG. 2 illustrates the message flow for subscribing to Zero Touch Connectivity (ZTC) in a communication system according to an embodiment of the invention. As shown in FIG. 2, the communication system comprises a User Equipment, UE, and an Operator IT system. The method comprises the following steps.

In step S01, in order to use ZTC, a UE subscribes to ZTC (e.g. as part of a data plan or as additional tariff option) at the Operator IT system, by using a subscriber identity, ID.

In step S02, the Operator IT system sets a ZTC status flag to "active" and stores the ZTC status flag and ZTC profile information to authorize the subscriber ID for the use of one or a combination of ZTC service functions on the UE.

The combination of the ZTC status flag and the ZTC profile information, associated with the subscriber ID, is referred to as ZTC status information. The ZTC status flag determines whether the customer is subscribed to ZTC (if subscribed, the ZTC status flag is active, otherwise, the ZTC status flag is "inactive") and the ZTC profile information includes which ZTC service functions is the UE allowed and authorized to use.

The ZTC service functions comprise: Entitlement, ET, server; Subscriber Credential Manager, SCM; Subscriber Data Platform, SDP; Crowd sourcing, CS; Network Data Analytics Platform, NDAP, data base; Predictive Steering, PS; and WiFi Hotspot Manager, WiFi HM

The ET server stores subscriber information. Further, the ET server can access and retrieve ZTC status information associated with a subscriber from the Operator IT system.

The SCM manages WiFi credentials for a ZTC subscriber across all its ZTC compatible UEs (a subscriber may be associated with more than one UE).

The SDP stores all ZTC subscriber relevant data such as personal WiFi credentials.

The CS collects information from the UE regarding its current access situation and related customer quality experience estimations. Further, the CS analyses and stores this information in the NDAP.

The NDAP data base stores all access data received from the UE via CS.

The PS, on request, supports the UE's decision making on connection management, based on data retrieved from the NDAP.

The WiFi HM manages connectivity via an AN, such as, for example, a third party AN, for a user subscribed to ZTC across all user's ZTC capable UEs. In more detail, the WiFi HM is configured to negotiate and fulfill service conditions with the AN for such connectivity and to decide whether to accept service offers from ANs.

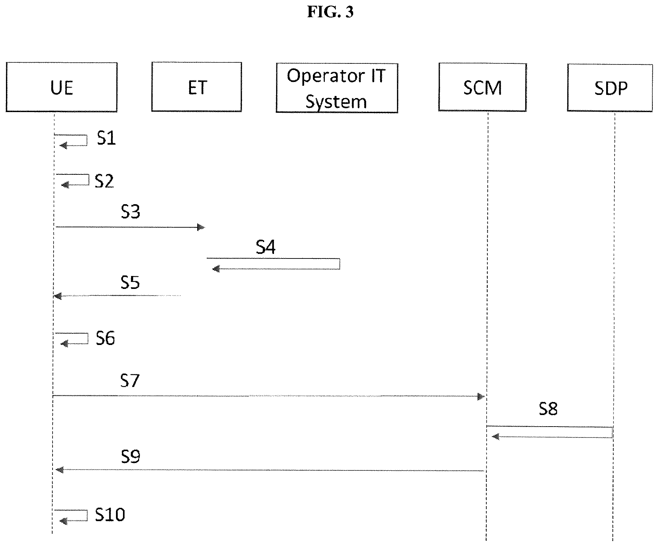

According to an embodiment of the invention, there is provided a method for enabling Zero Touch Connectivity (ZTC) access in the above mentioned communication system. In this embodiment, as shown in FIG. 3, the communication system of FIG. 2 further comprises a Zero Touch Connectivity (ZTC) operator backend associated with the Operator IT system, where the ZTC operator backend comprises the following functions: ET server, SCM, and SDP.

Preferably, the ZTC operator further comprises and supports the following functions: Crowd sourcing, CS; Network Data Analytics Platform, NDAP, data base; Predictive Steering, PS;

Preferably, the ZTC operator further comprises and supports the WiFi Hotspot Manager, HM, function.

The method for enabling ZTC connectivity access in the communication system preferably comprises the following steps.

In step S1, the UE registers to a cellular and/or WiFi network by using a subscriber identity, ID, in order to be able to establish connectivity with the ZTC operator backend.

For cellular networks the registration may be performed via Subscriber Identification Module, SIM, based access. For WiFi networks, the registration may be performed via any suitable method. Some examples of suitable methods are: existing auto-login technologies, such as EAP-SIM, WISPR, Passpoint or others; manually configured and stored credentials; credentials retrieved as a result of the ZTC SCM procedure; or any other method for registering to a WiFi.

In step S2, the UE determines the necessary address information to establish a connection with the responsible ZTC operator backend associated with the subscriber ID, and establishes a connection with the ZTC operator backend using the determined address information.

In step S3, the UE requests for ZTC status information associated with the subscriber ID, to the ET server.

In step S4, the ET server retrieves the ZTC status information associated with the subscriber ID from the operator IT system associated with the ZTC operator backend. The ZTC status information comprises: a ZTC status flag that determines whether the customer is subscribed to ZTC (if subscribed, the ZTC status flag is active, otherwise, the ZTC status flag is inactive) and a ZTC profile that includes further customer or tariff specific ZTC parameters.

In step S5, the ET server returns the requested ZTC status information to the UE.

In step S6, in case the ZTC status flag is set as active (e.g. "TRUE"), the UE sets an auto-connect switch to ON, and continues with the following steps S7 to S10. Alternatively, in the case where the ZTC status flag is set as inactive (e.g. "FALSE") or the ZTC status flag is set as active but the ZTC status flag was already set as active before (the previous ZTC status is stored by the UE) and the subscriber had manually set earlier the auto-connect switch as OFF (the previous switch status is stored by the UE), the following steps are not performed. Thus, the following steps S7 to S10 are only applied when auto-connect switch is ON.

In step S7, the UE sends a set of currently known and stored WiFi credentials, such as, for example, Service Set Identifiers (SSIDs) and passwords, to the SCM and requests synchronization with the SDP.

In step S8, the SCM accesses the SDP and, if necessary, stores new or updates existing set of WiFi credentials. The resulting new, and therefore most recent, set of WiFi credentials is retrieved from the SDP.

In step S9, the SCM sends the resulting new set of credentials to the UE.

In step S10, the UE updates and stores the received new set of credentials.

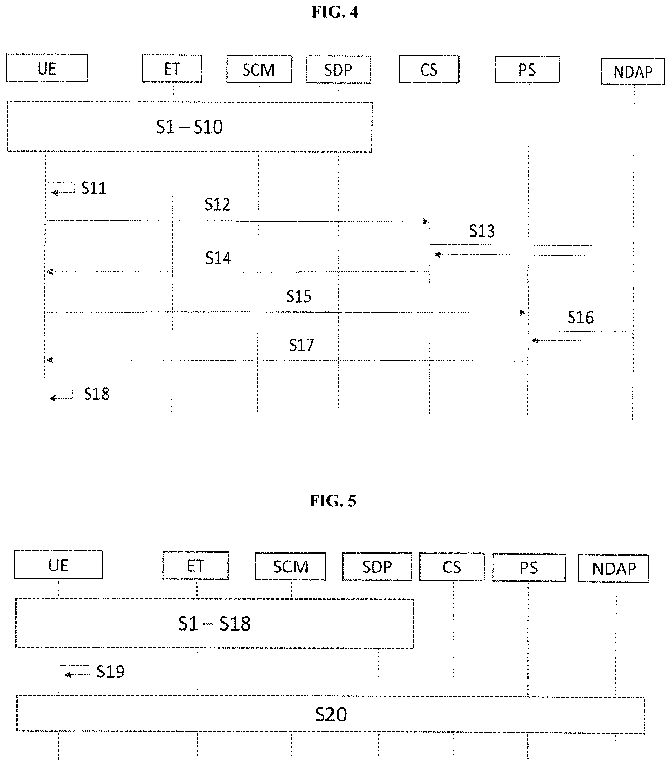

FIG. 4 shows a message flow according to a preferred embodiment of the invention. For this preferred embodiment, both the UE and ZTC operator backend support the functions of crowd sourcing (CS) and predictive steering (PS) information and the method further comprises the following steps S11 to S18:
In step S11, the UE collects and compiles various data from current local WiFi and cellular networks, related to its current location. The collected and compiled data may comprise: signal strength, current network performance, quality parameters, current estimated user experience, etc. The UE may perform dedicated network speed tests to accomplish this.

The current estimated user experience is derived from the requested Quality of Service (QoS) for connectivity resources by all running subscriber facing applications (downloads, audio/video streaming etc.) versus the granted QoS of these resources. These can be downlink and uplink bandwidth as well as latency and jitter.

In step S12, the UE sends the compiled data to the CS function.

In step S13, the CS function updates the NDAP data base with the received data.

In step S14, the CS function sends to the UE an acknowledgment receipt and successful processing of the data.

At this point, PS information is used to assist the UE's decision making to select the best locally available WiFi and/or cellular networks. The ZTC operator backend supplies the device with the respective information, based on CS and other data collected about networks based on devices current location.

In step S15, the UE checks whether valid PS information is locally available at the UE. PS information is regarded as valid if it is timely recent information and suitable for the current location. For example, the PS information may comprise a validity timer indicating until when is that PS information valid for a specific location and/or area. If there is no valid PS information, the UE requests (fresh/new) PS information from the PS function in the ZTC operator backend.

In step S16, the PS function accesses the NDAP database and it retrieves and compiles set of PS information related to the UE's current location. The PS information may contain, for example, a list of nearby WiFi and cellular networks with related timely quality predictions.

In step S17, the PS function returns the PS information to the UE.

In step S18, the UE stores the received PS information in the cache memory and verifies whether the currently used networks are optimal. If not, the device performs a new network registration(s) to improve the situation. A network is regarded as optimal when it is the network with the presumably best performance (e.g. throughput, latency) at present. For WiFi networks further parameters may also be considered for such optimal network selection, such as auto-login possibility as well as security level.

FIG. 5 illustrates the message flow according to a further preferred embodiment of the invention. In this preferred embodiment, the method further comprises the followings step S19 to S20:
In step S19, the UE performs a new network registration to an alternative WiFi and/or cellular network based on the stored PS information and other information, e.g. the availability of WiFi credentials.

In step S20, in the case the UE registered to any new network(s), an update of current network performance data is performed towards the CS backend function as in steps S11 to S14.

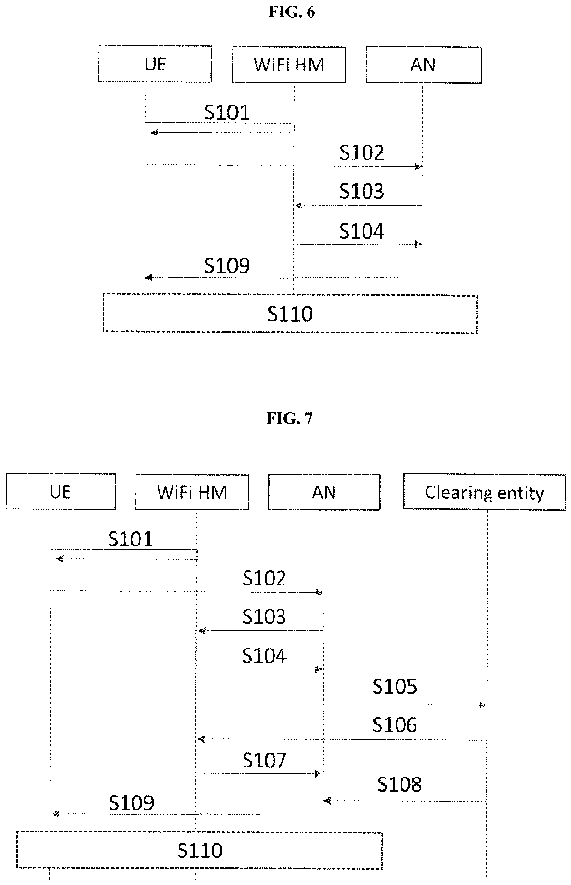

FIG. 6 illustrates the architecture and message flow according to a further preferred embodiment of the invention (not being claimed). FIG. 6 shows a Zero Touch Connectivity (ZTC) Operator Backend comprising and supporting the WiFi Hotspot Manager, HM, function, a User Equipment (UE), an Access Node (AN), and a clearing entity. According to a preferred embodiment of the invention, there is provided a method for providing Zero Touch Connectivity in a communication system, where method comprises the following steps.

In step S101 as an initial setup, the UE registers to the WiFi HM for the ZTC Hotspot service, and, upon successful registration, the WiFi HM supplies to the UE a unique and secure identity, ID, as well as a secure link that defines how the WiFi HM can be reached by any compatible AN, i.e. any ZTC compatible hotspot. The unique and secure ID is referred to as subscriber ID.

The subscriber ID may be obtained or derived from, for example, an International Mobile Subscriber Identity, IMSI (stored in a SIM card supplied to the device manually or in an eSIM profile downloaded by the user to the device). The subscriber ID can also be any other kind of unique and secure data item defined for that purpose. By contrast to the subscriber ID, which is permanent, the secure link can be updated over-the-air during the lifetime of the UE and the WiFi HM, respectively.

In step S102, the UE, upon detection of an available AN, sends an access service request to the AN, where the request comprises the subscriber ID (e.g. IMSI) of the UE as well as the secure link to its serving provider.

In step S103, the AN sends an access service offer to the WiFi HM of the subscriber requesting the service. The offer comprises the secure link and the subscriber ID as provided by the UE in step S102. The offer further comprises other parameters, such as: a certificate of security of the AN (if there is a need that the hotspot "proves" that it can be trusted to use state-of-the art security mechanisms such as ciphering, or the like); required terms and conditions; and a requested usage fee and a billing reference (e.g. a PayPal address).

Optionally, the offer may further comprise other parameters such as: other general hotspot characteristics, i.e. optional parameters that qualify the WiFi Network / hotspot further, such as support of 802.11 technology evolutions, performance classes, etc; requested alternative benefits such as user insights provisioning or WiFi proximity service enabling. The WiFi HM checks/verifies the data of the access service offer and decides on whether to accept the service offer from the AN.

In step S104, if the service offer is accepted, the WiFi HM sends a confirmation to the AN that the service offer has been accepted and that a respective payment process will be triggered. The confirmation includes information that the service included in the requested usage fee is granted to the AN as well as that the user is an eligible customer.

Optionally, the WiFi HM and the AN may perform further iterations for usage feed negotiations, i.e. service is accepted for a proposed fee different than the received offer. The AN can then accept or reject the counter-offer, and so on until one party rejects.

Once the confirmation is received at the AN, the AN may decide to grant access to the UE (i.e. proceed to step S109) or to wait until a further confirmation is received.

In step S110, the UE connects online via the AN.

According to a further preferred embodiment of the invention, the above method may further comprise the following steps as illustrated in FIG. 7. In FIG. 7 the same system as shown in FIG. 6, but the system further comprises a clearing entity. In this preferred embodiment, the following steps are performed between steps S104 and S109 of FIG. 6.

In step S105, the WiFi HM triggers a payment based on the received billing reference towards a clearing entity, i.e. a clearing house. It can also refer to an existing bulk payment transaction for that hotspot or a group of hotspots.

In step S106, the clearing entity accepts the payment, by sending a payment confirmation or rejection to the WiFi HM, and, in addition, informs to the WiFi HM whether the AN is eligible and not blacklisted for any reason. In the case that the AN is not eligible and/or blacklisted for any reason, the clearing entity rejects the payment and informs about the reasons of rejection (i.e. AN is not eligible, blacklisted, etc.) of the payment.

In step S107, if the payment has been accepted (the AN is eligible and not blacklisted), the WiFi HM sends a further confirmation to the AN that the payment has been accepted. Otherwise, the WiFi HM sends a message to the AN that the payment has been rejected.

In step S108, the clearing entity informs the AN about the incoming payment.

In step S109, the AN informs the UE about the granted access.

In step S110, the UE connects online via the AN.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for enabling Zero Touch Connectivity, ZTC, access in a communication system, wherein the system comprises a User Equipment, UE, a ZTC operator backend associated with an Operator IT system, wherein the ZTC operator backend comprises and supports at least the following functions: Entitlement, ET, server, Subscriber Credential Manager, SCM; and a Subscriber Data Platform, SDP, the method comprising the steps of:
registering (S1), from the UE, to a cellular network and/or WiFi network by using a subscriber identity, ID, wherein the subscriber ID is associated with a ZTC operator backend an Operator IT system;
determining (S2), at the UE, address information to establish a connection with the ZTC operator backend associated to the subscriber ID, and establishing a connection with the ZTC operator backend using the determined address information;
requesting (S3), from the UE to the ET server, ZTC status information associated with the subscriber ID;
retrieving (S4), at the ET server, the ZTC status information associated with the subscriber ID, from the associated responsible Operator IT system, wherein the ZTC status information comprises a ZTC status flag and ZTC profile information, wherein the ZTC status flag being active indicates that the subscriber ID is subscribed to ZTC and the ZTC status flag being inactive indicates that the subscriber ID is not subscribed to ZTC, and wherein the ZTC profile information indicates whether the subscriber ID is authorized to use one or a combination of ZTC service functions on the UE;
returning (S5), from the ET server to the UE, the requested ZTC status information;
if the ZTC status flag is set active, setting (S6), at the UE, an auto-connect switch to ON,
if the ZTC status flag is set inactive, or if the ZTC status flag is set active but the ZTC status flag was already set active before and the subscriber ID had manually set earlier the auto-connect switch as OFF, the method is terminated;
sending (S7), from the UE to the SCM, a set of WiFi credentials, wherein the WiFi credentials are known and stored in the UE, and requesting synchronization with the SDP;
synchronizing (S8), from the SCM to the SDP, by storing new or updating the set of WiFi credentials as received by the UE and retrieving the synchronized set of WiFi credentials;
sending (S9), from the SCM to the UE, the synchronized set of WiFi credentials;
receiving, updating and storing (S10), at the UE, the synchronized set of WiFi credentials.

2. The method of claim 1, wherein the UE and ZTC operator backend further support the functions of crowd sourcing, CS, Network Data Analytics Platform, NDAP, data base, and predictive steering, PS, information, the method further comprising:
collecting and compiling (S11), at the UE's current location, data of WiFi and/or cellular networks, wherein the data comprises one or a combination of the following quality parameters associated with the WiFi and/or cellular networks: signal strength, current network performance, current user experience estimation;
sending (S12), from the UE to the CS, the compiled data;
updating (S13), from the CS to the NDAP data base, the compiled data as received by the UE;
sending (S14), from the CS to the UE, an acknowledgment receipt and indicating if the update of the data has been successful;
checking (S15), at the UE, whether valid PS information is locally available, wherein the PS information comprises a validity timer indicating a time until which the PS information is valid for a specific location and/or area, and
in the case that there is no valid PS information at the UE:
requesting for new PS information to the PS function;
accessing, retrieving and compiling (S16), from the PS function to the NDAP data base, a set of PS information associated with the UE's current location and/or area, wherein the set of PS information contains a list of WiFi and/or cellular networks with related quality parameter predictions and an associated validity timer, respectively,
returning (S17), from the PS function to the UE, the set of PS information associated with the UE's current location and/or area;
storing (S18), at the UE, the set of PS information and verifying whether the cellular and/or Wifi networks to which the UE is currently registered are optimal, wherein a network is regarded as optimal if there is no other network with better quality parameter predictions;
if the current cellular and/or WiFi network or networks is optimal, the following step is skipped,
alternatively, if the current cellular and/or WiFi network or networks is not optimal,
performing a new cellular and/or WiFi network registration or registrations to the network with the best quality parameter predictions.

3. The method of claim 2, wherein performing a new cellular network and/or WiFi network registration or registrations, comprises:
using (S19), at the UE, the stored PS information and set of WiFi credentials to decide which registration or registrations to perform;
performing (S20), from the UE to the CS, an update of current network performance data, wherein the update of current network performance data comprises:
collecting and compiling (S11), at the UE's current location, data of WiFi and/or cellular networks, wherein the data comprises one or a combination of the following quality parameters associated with the WiFi and/or cellular networks: signal strength, current network performance, current user experience estimation;
sending (S12), from the UE to the CS, the compiled data;
updating (S13), from the CS to the NDAP data base, the compiled data as received by the UE;
sending (S14), from the CS to the UE, an acknowledgment receipt and indicating if the update of the data has been successful.

4. A communication system comprising a User Equipment, UE, a ZTC operator backend associated with an Operator IT system, wherein the ZTC operator backend comprises and supports the following functions: Entitlement, ET, server, Subscriber Credential Manager, SCM; and a Subscriber Data Platform, SDP, wherein:
the UE is configured to register, to a cellular network and/or WiFi network by using a subscriber identity, ID, wherein the subscriber ID is associated with a ZTC operator backend an Operator IT system;
the UE is configured to determine address information to establish a connection with the ZTC operator backend associated the subscriber ID, and to establish a connection with the ZTC operator backend using the determined address information;
the UE is configured to request to the ET server, ZTC status information associated with the subscriber ID;
the ET server is configured to retrieve the ZTC status information associated with the subscriber ID, from the associated responsible Operator IT system, wherein the ZTC status information comprises a ZTC status flag and ZTC profile information, wherein the ZTC status flag being active indicates that the subscriber ID is subscribed to ZTC and the ZTC status flag being inactive indicates that the subscriber ID is not subscribed to ZTC, and wherein the ZTC profile information indicates whether the subscriber ID is authorized to use one or a combination of ZTC service functions on the UE;
the ET server is configured to return to the UE, the requested ZTC status information;
if the ZTC status flag is set active, the UE is configured to set, an auto-connect switch to ON,
if the ZTC status flag is set inactive, or if the ZTC status flag is set active but the ZTC status flag was already set active before and the subscriber ID had manually set earlier the auto-connect switch as OFF, the UE is configured to maintain the auto-connect switch as OFF;
the UE is configured to send to the SCM, a set of WiFi credentials, wherein the WiFi credentials are known and stored in the UE, and requesting synchronization with the SDP;
the SCM is configured to synchronize with the SDP, by storing new or updating the set of WiFi credentials as received by the UE and to retrieve the synchronized set of WiFi credentials;
the SCM is configured to send to the UE, the synchronized set of WiFi credentials;
the UE is configured to receive, update and store, the synchronized set of WiFi credentials.

5. The system of claim 4, wherein the UE and ZTC operator backend further support the functions of crowd sourcing, CS, Network Data Analytics Platform, NDAP, data base, and predictive steering, PS, information, and wherein:
the UE is configured to collect and compile, data of WiFi and/or cellular networks at the UE's current location, wherein the data comprises one or a combination of the following quality parameters associated with the WiFi and/or cellular networks: signal strength, current network performance, current user experience estimation;
the UE is configured to send to the CS, the compiled data;
the CS is configured to update to the NDAP data base, the compiled data as received by the UE;
the CS is configured to send to the UE, an acknowledgment receipt indicating if the update of the data has been successful;
the UE is configured to check whether valid PS information is locally available, wherein the PS information comprises a validity timer indicating a time until which the PS information is valid for a specific location and/or area, and
in the case that there is no valid PS information at the UE:
the UE is configured to request new PS information to the PS function;
the PS function is configured to access the NDAP data base, retrieve and compile, a set of PS information associated with the UE's current location and/or area, wherein the set of PS information contains a list of WiFi and/or cellular networks with related quality parameter predictions and an associated validity timer, respectively,
the PS function is configured to return to the UE, the set of PS information associated with the UE's current location and/or area;
the UE is configured to store the set of PS information and to verify whether the cellular and/or WiFi networks to which the UE is currently registered are optimal, wherein a network is regarded as optimal if there is no other network with better quality parameter predictions;
and, if the current cellular and/or WiFi network or networks is not optimal,
the UE is configured to perform a new cellular and/or WiFi network registration or registrations to the network or networks with the best quality parameter predictions.

6. The system of claim 5, wherein when a new cellular and/or WiFi network registration or registrations is performed:
the UE is configured to use the stored PS information and set of WiFi credentials to decide which registration or registrations to perform;
the UE is configured to perform to the CS, an update of current network performance data, wherein the UE is configured to:
collect and compile, at the UE's current location, data of WiFi and/or cellular networks, wherein the data comprises one or a combination of the following quality parameters associated with the WiFi and/or cellular networks: signal strength, current network performance, current user experience estimation;
send to the CS the compiled data;
wherein the CS is configured to update to the NDAP data base, the compiled data as received by the UE, and to send, to the UE, an acknowledgment receipt indicating if the update of the data has been successful.

## Patentansprüche

1. Verfahren zum Ermöglichen eines berührungslosen Konnektivitäts-, ZTC, Zugriffs in einem Kommunikationssystem, wobei das System eine Benutzereinrichtung, UE, und ein ZTC-Betreiber-Backend aufweist, das mit einem Betreiber-IT-System verknüpft ist, wobei das ZTC-Betreiber-Backend die folgenden Funktionen aufweist und unterstützt: einen Berechtigungs-, ET, Server, einen Teilnehmer-Anmeldeinformations-Manager, SCM, und eine Teilnehmer-Datenplattform, SDP, wobei das Verfahren die Schritte aufweist:
Registrieren (S1) der UE an einem Mobilfunknetzwerk und/oder WiFi-Netzwerk unter Verwendung einer Teilnehmeridentität, ID, wobei die Teilnehmer-ID mit einem ZTC-Betreiber-Backend eines Betreiber-IT-Systems verknüpft ist;
Bestimmen (S2) an der UE von Adressinformationen, um eine Verbindung mit dem ZTC-Betreiber-Backend herzustellen, das mit der Teilnehmer-ID verknüpft ist, und Herstellen einer Verbindung mit dem ZTC-Betreiber-Backend unter Verwendung der bestimmten Adressinformationen;
Anfordern (S3) von der UE am ET-Server von ZTC-Statusinformationen, die mit der Teilnehmer-ID verknüpft sind;
Abrufen (S4) am ET-Server der ZTC-Statusinformationen, die mit der Teilnehmer-ID verknüpft sind, vom verknüpften verantwortlichen Betreiber-IT-System, wobei die ZTC-Statusinformationen ein ZTC-Statusflag und ZTC-Profilinformationen aufweisen, wobei wenn das ZTC-Statusflag aktiv ist, es anzeigt, dass die Teilnehmer-ID bei der ZTC angemeldet ist, und wenn das ZTC-Statusflag inaktiv ist, es anzeigt, dass die Teilnehmer-ID nicht bei der ZTC angemeldet ist, und wobei die ZTC-Profilinformationen anzeigen, ob die Teilnehmer-ID berechtigt ist, eine oder eine Kombination von ZTC-Dienstfunktionen auf der UE zu verwenden;
Zurückschicken (S5) vom ET-Server an die UE der angeforderten ZTC-Statusinformationen;
wenn das ZTC-Statusflag aktiv gesetzt ist, Setzen (S6) an der UE eines automatischen Verbindungsschalters auf EIN,
wenn das ZTC-Statusflag inaktiv gesetzt ist oder wenn das ZTC-Statusflag aktiv gesetzt ist, jedoch das ZTC-Statusflag bereits zuvor auf aktiv gesetzt war und die Teilnehmer-ID früher den automatischen Verbindungsschalter manuell auf AUS gesetzt hatte, wird das Verfahren beendet;
Senden (S7) von der UE an den SCM eine Satzes von WiFi-Anmeldeinformationen, wobei die WiFi-Anmeldeinformationen bekannt und in der UE gespeichert sind, und Anfordern einer Synchronisation mit der SDP;
Synchronisieren (S8) vom SCM mit der SDP durch Speichern eines neuen oder Aktualisieren des Satzes der WiFi-Anmeldeinformationen, wie sie durch die UE empfangen wurden, und Abrufen des synchronisierten Satzes der WiFi-Anmeldeinformationen;
Senden (S9) vom SCM an die UE des synchronisierten Satzes der WiFi-Anmeldeinformationen;
Empfangen, Aktualisieren und Speichern (S10) an der UE des synchronisierten Satzes der WiFi-Anmeldeinformationen.

2. Verfahren nach Anspruch 1, wobei die UE und das ZTC-Betreiber-Backend ferner die Funktionen der Schwarmauslagerung, CS, einer Netzwerk-Datenanalyseplattform-, NDAP, Datenbank und von Vorhersagesteuerungs-, PS, Informationen unterstützen, wobei das Verfahren ferner aufweist:
Sammeln und Zusammenstellen (S11) am gegenwärtigen Ort der UE von Daten von WiFi- und/oder Mobilfunknetzwerken, wobei die Daten einen oder eine Kombination der folgenden Qualitätsparameter aufweisen, die mit den WiFi- und/oder Mobilfunknetzwerken verknüpft sind: Signalstärke, gegenwärtige Netzwerkleistung, gegenwärtige Schätzung der Benutzererfahrung;
Senden (S12) von der UE der zusammengestellten Daten an die CS;
Aktualisieren (S13) von der CS in der NDAP-Datenbank der zusammengestellten Daten, wie sie durch die UE empfangen wurden;
Senden (S14) von der CS an die UE einer Empfangsbestätigung und Anzeigen, ob die Aktualisierung der Daten erfolgreich gewesen ist;
Prüfen (S15) an der UE, ob gültige PS-Informationen lokal verfügbar sind, wobei die PS-Informationen einen Gültigkeitszeitgeber aufweisen, der eine Zeit angibt, bis zu der die PS-Informationen für einen bestimmten Ort und/oder Bereich gültig sind, und
falls es keine gültigen PS-Informationen an der UE gibt:
Anfordern neuer PS-Informationen für die PS-Funktion;
Zugreifen von der PS-Funktion auf die NDAP-Datenbank und Abrufen und Zusammenstellen (S16) eines Satzes der PS-Informationen, die mit dem gegenwärtigen Ort der UE und/oder Bereich verknüpft sind, wobei der Satz der PS-Informationen eine Liste von WiFi- und/oder Mobilfunknetzwerken mit zugehörigen Qualitätsparametervorhersagen bzw. einem verknüpften Gültigkeitszeitgeber enthält,
Zurückschicken (S17) von der PS-Funktion an die UE des Satzes der PS-Informationen, die mit dem gegenwärtigen Ort der UE und/oder Bereich verknüpft sind;
Speichern (S18) an der UE des Satzes der PS-Informationen und Verifizieren, ob die Mobilfunk- und/oder WiFi-Netzwerke, bei denen die UE derzeit registriert ist, optimal sind, wobei ein Netzwerk als optimal angesehen wird, wenn es kein anderes Netzwerk mit besseren Qualitätsparametervorhersagen gibt;
wenn das gegenwärtige Mobilfunk- und/oder WiFi-Netzwerk oder Netzwerk optimal sind, der folgende Schritt übersprungen wird,
alternativ, wenn das gegenwärtige Mobilfunk- und/oder WiFi-Netzwerk oder die Netzwerke nicht optimal sind, Durchführen einer neuen Mobilfunk- und/oder WiFi-Netzwerkregistrierung oder -Registrierungen am Netzwerk mit den besten Qualitätsparametervorhersagen.

3. Verfahren nach Anspruch 2, wobei das Durchführen einer neuen Mobilfunknetzwerk- und/oder WiFi-Netzwerkregistrierung oder -Registrierungen aufweist:
Verwenden (S19) an der UE der gespeicherten PS-Informationen und des Satzes der WiFi-Anmeldeinformationen, um zu entscheiden, welche Registrierung oder Registrierungen durchzuführen sind;
Durchführen (S20) von der UE an der CS einer Aktualisierung gegenwärtiger Netzwerkleistungsdaten, wobei die Aktualisierung der gegenwärtigen Netzwerkleistungsdaten aufweist:
Sammeln und Zusammenstellen (S11) am gegenwärtigen Ort der UE von Daten von WiFi- und/oder Mobilfunknetzwerken, wobei die Daten einen oder eine Kombination der folgenden Qualitätsparameter aufweisen, die mit den WiFi- und/oder Mobilfunknetzwerken verknüpft sind: Signalstärke, gegenwärtige Netzwerkleistung, gegenwärtige Schätzung der Benutzererfahrung;
Senden (S12) von der UE an die CS der zusammengestellten Daten;
Aktualisieren (S13) von der CS in der NDAP-Datenbank der zusammengestellten Daten,
wie sie durch die UE empfangen wurden;
Senden (S14) von der CS an die UE einer Empfangsbestätigung und Anzeigen, ob die Aktualisierung der Daten erfolgreich gewesen ist.

4. Kommunikationssystem, das eine Benutzereinrichtung, UE, und ein ZTC-Betreiber-Backend aufweist, das mit einem Betreiber-IT-System verknüpft ist, wobei das ZTC-Betreiber-Backend folgende Funktionen aufweist und unterstützt: Berechtigungs-, ET, Server, Teilnehmer-Anmeldeinformations-Manager, SCM, und eine Teilnehmer-Datenplattform, SDP, wobei:
die UE konfiguriert ist, sich an einem Mobilfunknetzwerk und/oder WiFi-Netzwerk unter Verwendung einer Teilnehmeridentität, ID, zu registrieren, wobei die Teilnehmer-ID mit einem ZTC-Betreiber-Backend eines Betreiber-IT-Systems verknüpft ist;
die UE konfiguriert ist, Adressinformationen zu bestimmen, um eine Verbindung mit dem ZTC-Betreiber-Backend herzustellen, das mit der Teilnehmer-ID verknüpft ist, und eine Verbindung mit dem ZTC-Betreiber-Backend unter Verwendung der bestimmten Adressinformationen herzustellen;
die UE konfiguriert ist, am ET-Server ZTC-Statusinformationen anzufordern, die mit der Teilnehmer-ID verknüpft sind;
der ET-Server konfiguriert ist, die ZTC-Statusinformationen, die mit der Teilnehmer-ID verknüpft sind, vom verknüpften verantwortlichen Betreiber-IT-System abzurufen, wobei die ZTC-Statusinformationen ein ZTC-Statusflag und ZTC-Profilinformationen aufweisen, wobei wenn das das ZTC-Statusflag aktiv ist, es anzeigt, dass die Teilnehmer-ID bei der ZTC angemeldet ist, und wenn das das ZTC-Statusflag inaktiv ist, es anzeigt, dass die Teilnehmer-ID nicht bei der ZTC angemeldet ist, und wobei die ZTC-Profilinformationen anzeigen, ob die Teilnehmer-ID berechtigt ist, eine oder eine Kombination von ZTC-Dienstfunktionen auf der UE zu verwenden;
der ET-Server konfiguriert ist, an die UE die angeforderten ZTC-Statusinformationen zurückzuschicken;
wenn das ZTC-Statusflag aktiv gesetzt ist, die UE konfiguriert ist, einen automatischen Verbindungsschalter auf EIN zu setzen,
wenn das ZTC-Statusflag inaktiv gesetzt ist oder wenn das ZTC-Statusflag aktiv gesetzt ist, jedoch das ZTC-Statusflag bereits zuvor auf aktiv gesetzt war und die Teilnehmer-ID früher den automatischen Verbindungsschalter manuell auf AUS gesetzt hatte, die UE konfiguriert ist, den automatischen Verbindungsschalter auf AUS zu halten;
die UE konfiguriert ist, an den SCM einen Satz von WiFi-Anmeldeinformationen zu senden, wobei die WiFi-Anmeldeinformationen bekannt und in der UE gespeichert sind, und eine Synchronisation mit der SDP anzufordern;
der SCM konfiguriert ist, mit der SDP durch Speichern eines neuen oder Aktualisieren des Satzes der WiFi-Anmeldeinformationen zu synchronisieren, wie sie durch die UE empfangen wurden, und den synchronisierten Satz der WiFi-Anmeldeinformationen abzurufen;
der SCM konfiguriert ist, an die UE den synchronisierten Satz der WiFi-Anmeldeinformationen zu senden;
die UE konfiguriert ist, den synchronisierten Satz der WiFi-Anmeldeinformationen zu empfangen, zu aktualisieren und zu speichern.

5. System nach Anspruch 4, wobei die UE und das ZTC-Betreiber-Backend ferner die Funktionen der Schwarmauslagerung, CS, einer Netzwerk-Datenanalyseplattform-, NDAP, Datenbank und von Vorhersagesteuerungs-, PS, Informationen unterstützen, und wobei:
die UE konfiguriert ist, Daten von WiFi- und/oder Mobilfunknetzwerken am gegenwärtigen Ort der UE zu sammeln und zusammenzustellen, wobei die Daten einen oder eine Kombination der folgenden Qualitätsparameter aufweisen, die mit den WiFi- und/oder Mobilfunknetzwerken verknüpft sind: Signalstärke, gegenwärtige Netzwerkleistung, gegenwärtige Schätzung der Benutzererfahrung;
die UE konfiguriert ist, die zusammengestellten Daten an die CS zu senden;
die CS konfiguriert ist, in der NDAP-Datenbank die zusammengestellten Daten zu aktualisieren, wie sie durch die UE empfangen wurden;
die CS konfiguriert ist, an die UE eine Empfangsbestätigung zu senden, die anzeigt, ob die Aktualisierung der Daten erfolgreich gewesen ist;
die UE konfiguriert ist, zu prüfen, ob gültige PS-Informationen lokal verfügbar sind, wobei die PS-Informationen einen Gültigkeitszeitgeber aufweisen, der eine Zeit angibt, bis zu der die PS-Informationen für einen bestimmten Ort und/oder Bereich gültig sind, und
falls es keine gültigen PS-Informationen an der UE gibt:
die UE konfiguriert ist, neue PS-Informationen für die PS-Funktion anzufordern;
die PS-Funktion konfiguriert ist, auf die NDAP-Datenbank zuzugreifen, um einen Satz der PS-Informationen abzurufen und zusammenzustellen, die mit dem gegenwärtigen Ort der UE und/oder Bereich verknüpft sind, wobei der Satz der PS-Informationen eine Liste von WiFi- und/oder Mobilfunknetzwerken mit zugehörigen Qualitätsparametervorhersagen bzw. einem verknüpften Gültigkeitszeitgeber enthält,
die PS-Funktion konfiguriert ist, an die UE den Satz der PS-Informationen zurückzuschicken, die mit dem gegenwärtigen Ort der UE und/oder Bereich verknüpft sind;
die UE konfiguriert ist, den Satz der PS-Informationen zu speichern und zu verifizieren, ob die Mobilfunk- und/oder WiFi-Netzwerke, an denen die UE gegenwärtig registriert ist, optimal sind, wobei ein Netzwerk als optimal angesehen wird, wenn es kein anderes Netzwerk mit besseren Qualitätsparametervorhersagen gibt;
und wenn das gegenwärtige Mobilfunk- und/oder WiFi-Netzwerk oder Netzwerke nicht optimal sind,
die UE konfiguriert ist, eine neue Mobilfunk- und/oder WiFi-Netzwerkregistrierung oder Registrierungen an dem Netzwerk oder den Netzwerken mit den besten Qualitätsparametervorhersagen durchzuführen.

6. System nach Anspruch 5, wobei wenn eine neue Mobilfunk- und/oder WiFi-Netzwerkregistrierung oder -Registrierungen durchgeführt werden:
die UE konfiguriert ist, die gespeicherten PS-Informationen und den Satz der WiFi-Anmeldeinformationen zu verwenden, welche Registrierung oder Registrierungen durchgeführt werden sollen;
die UE konfiguriert ist, an der CS eine Aktualisierung der gegenwärtigen Netzwerkleistungsdaten durchzuführen, wobei die UE konfiguriert ist:
am gegenwärtigen Ort der UE Daten von WiFi- und/oder Mobilfunknetzwerken zu sammeln oder zusammenzustellen, wobei die Daten einen oder eine Kombination der folgenden Qualitätsparameter aufweisen, die mit den WiFi- und/oder Mobilfunknetzwerken verknüpft sind: Signalstärke, gegenwärtige Netzwerkleistung, gegenwärtige Schätzung der Benutzererfahrung;
die zusammengestellten Daten an die CS zu senden;
wobei die CS konfiguriert ist, in der NDAP-Datenbank die zusammengestellten Daten zu aktualisieren, wie sie durch die UE empfangen wurden, und eine Empfangsbestätigung an die UE zu senden, die anzeigt, ob die Aktualisierung der Daten erfolgreich gewesen ist.

## Revendications

1. Procédé permettant un accès par connectivité sans contact ZTC, dans un système de communication, ledit système comprenant un équipement utilisateur UE, un opérateur d'arrière-plan ZTC associé à un système informatique d'opérateur, l'opérateur d'arrière-plan ZTC comprenant et assistant au moins les fonctions suivantes : admissibilité ET, serveur, gestionnaire d'identification d'abonnés SCM ; et plateforme de données d'abonnés SDP, ledit procédé comprenant les étapes suivantes :
enregistrement (S1), à partir de l'UE, sur un réseau cellulaire et/ou un réseau WiFi au moyen d'une identité d'abonné ID, l'ID d'abonné étant associée à un opérateur d'arrière-plan ZTC, d'un système informatique d'opérateur ;
détermination (S2), au niveau de l'UE, d'informations d'adresse afin d'établir une connexion avec l'opérateur d'arrière-plan ZTC associé à l'ID d'abonné, et établissement d'une connexion avec l'opérateur d'arrière-plan ZTC au moyen des informations d'adresse déterminées ;
demande (S3), de l'UE au serveur ET, d'informations d'état ZTC associées à l'ID d'abonné ;
récupération (S4), au niveau du serveur ET, des informations d'état ZTC associées à l'ID d'abonné, à partir du système informatique d'opérateur responsable associé, les informations d'état ZTC comprenant un indicateur d'état ZTC et des informations de profil ZTC, l'indicateur d'état ZTC actif indiquant que l'ID d'abonné est affilié à ZTC et l'indicateur d'état ZTC inactif indiquant que l'ID d'abonné n'est pas affilié à ZTC, et les informations de profil ZTC indiquant si l'ID d'abonné est autorisée à utiliser une fonction de service ZTC, ou une combinaison de fonctions de service ZTC sur l'UE ;
renvoi (S5), du serveur ET à l'UE, des informations d'état ZTC demandées ;
si l'indicateur d'état ZTC est activé, activation (S6), au niveau de l'UE, d'un commutateur de connexion automatique,
si l'indicateur d'état ZTC est désactivé, ou si l'indicateur d'état ZTC est activé mais que l'indicateur d'état ZTC était déjà activé auparavant et que l'ID d'abonné avait manuellement désactivé le commutateur de connexion automatique, arrêt du procédé ;
envoi (S7), de l'UE au SCM, d'un ensemble d'identifiants WiFi, les identifiants WiFi étant connus et mémorisés dans l'UE, et demande de synchronisation avec la SDP ;
synchronisation (S8), du SCM à la SDP, par mémorisation de nouveaux identifiants WiFi ou mise à jour de l'ensemble d'identifiants WiFi tels que reçus par l'UE et récupération de l'ensemble d'identifiants WiFi synchronisé ;
envoi (S9), du SCM à l'UE, de l'ensemble d'identifiants WiFi synchronisé ;
réception, mise à jour et mémorisation (S10), au niveau de l'UE, de l'ensemble d'identifiants WiFi synchronisé.

2. Procédé selon la revendication 1, où l'UE et l'opérateur d'arrière-plan ZTC assistent en outre les fonctions d'externalisation ouverte CS, de base de données de plateforme d'analyse de données réseau NDAP, et d'informations de commande prédictive PS, ledit procédé comprenant en outre :
la collecte et la compilation (S11), au niveau de l'emplacement actuel de l'UE, de données de réseaux WiFi et/ou cellulaires, les données comprenant un paramètre, ou une combinaison des paramètres de qualité suivants associés aux réseaux WiFi et/ou cellulaires : intensité de signal, performance de réseau actuelle, estimation d'expérience utilisateur actuelle ;
l'envoi (S12), de l'UE à la CS, des données compilées ;
la mise à jour (SI3), de la CS à la base de données NDAP, des données compilées telles que reçues par l'UE ;
l'envoi (S14), de la CS à l'UE, d'un accusé de réception et l'indication si la mise à jour des données a réussi ;
le contrôle (S15), au niveau de l'UE, si des informations PS valides sont localement disponibles, les informations PS comprenant un temporisateur de validité indiquant un temps jusqu'où les informations PS sont valides pour un emplacement et/ou une zone spécifiques, et
dans le cas où aucune information PS valide n'est présentée au niveau de l'UE :
la demande de nouvelles informations PS à la fonction PS ;
l'accès, la récupération et la compilation (S16), de la fonction PS à la base de données NDAP, d'un ensemble d'informations PS associé à l'emplacement et/ou la zone actuels de l'UE, l'ensemble d'informations PS contenant une liste de réseaux WiFi et/ou cellulaires avec des prédictions de paramètres de qualité correspondantes et un temporisateur de validité associé, respectivement,
le renvoi (S17), de la fonction PS à l'UE, de l'ensemble d'informations PS associé à l'emplacement et/ou la zone actuels de l'UE ;
la mémorisation (S18), au niveau de l'UE, de l'ensemble d'informations PS et la vérification si les réseaux cellulaires et/ou Wifi où l'UE est actuellement enregistré sont optimaux, un réseau étant considéré optimal si aucun autre réseau n'est présenté avec de meilleures prédictions de paramètres de qualité ;
si le ou les réseaux cellulaires et/ou Wifi actuels sont optimaux, l'étape suivante est sautée,
de manière alternative, si le ou les réseaux cellulaires et/ou Wifi actuels ne sont pas optimaux, l'exécution d'un enregistrement ou d'enregistrements de nouveau réseau cellulaire et/ou WiFi sur le réseau avec les meilleures prédictions de paramètres de qualité.

3. Procédé selon la revendication 2, où l'exécution d'un enregistrement ou d'enregistrements de nouveau réseau cellulaire et/ou WiFi comprend :
l'exploitation (S19), au niveau de l'UE, des informations PS mémorisées et de l'ensemble d'identifiants WiFi afin de décider de l'enregistrement ou des enregistrements à effectuer ;
l'exécution (S20), de l'UE vers la CS, d'une mise à jour des données de performance de réseau actuelle, la mise à jour des données de performance de réseau actuelle comprenant :
la collecte et la compilation (S11), au niveau de l'emplacement actuel de l'UE, de données de réseaux WiFi et/ou cellulaires, les données comprenant un paramètre, ou une combinaison des paramètres de qualité suivants associés aux réseaux WiFi et/ou cellulaires : intensité de signal, performance de réseau actuelle, estimation d'expérience utilisateur actuelle ;
l'envoi (S12), de l'UE à la CS, des données compilées ;
la mise à jour (S13), de la CS à la base de données NDAP, des données compilées telles que reçues par l'UE ;
l'envoi (S14), de la CS à l'UE, d'un accusé de réception indiquant si la mise à jour des données a réussi.

4. Système de communication comprenant un équipement utilisateur UE, un opérateur d'arrière-plan ZTC associé à un système informatique d'opérateur, l'opérateur d'arrière-plan ZTC comprenant et assistant les fonctions suivantes : admissibilité ET, serveur, gestionnaire d'identification d'abonnés SCM ; et une plateforme de données d'abonnés SDP, où :
l'UE est prévu pour enregistrer, sur un réseau cellulaire et/ou réseau WiFi au moyen d'une identité d'abonné ID, l'ID d'abonné étant associée à un opérateur d'arrière-plan ZTC, un système informatique d'opérateur ;
l'UE est prévu pour déterminer des informations d'adresse afin d'établir une connexion avec l'opérateur d'arrière-plan ZTC associé à l'ID d'abonné, et d'établir une connexion avec l'opérateur d'arrière-plan ZTC au moyen des informations d'adresse déterminées ;
l'UE est prévu pour demander au serveur ET, des informations d'état ZTC associées à l'ID d'abonné ;
le serveur ET est prévu pour récupérer les informations d'état ZTC associées à l'ID d'abonné, à partir du système informatique d'opérateur responsable associé, les informations d'état ZTC comprenant un indicateur d'état ZTC et des informations de profil ZTC, l'indicateur d'état ZTC activé indiquant que l'ID d'abonné est affilié à ZTC et l'indicateur d'état ZTC désactivé indiquant que l'ID d'abonné n'est pas affilié à ZTC, et les informations de profil ZTC indiquant si l'ID d'abonné est autorisé à recourir à une fonction, ou à une combinaison de fonctions de service ZTC sur l'UE ;
le serveur ET est prévu pour renvoyer à l'UE les informations d'état ZTC demandées ;
si l'indicateur d'état ZTC est activé, l'UE est prévu pour activer un commutateur de connexion automatique,
si l'indicateur d'état ZTC est désactivé, ou si l'indicateur d'état ZTC est activé mais que l'indicateur d'état ZTC était déjà activé auparavant et que l'ID d'abonné avait manuellement désactivé le commutateur de connexion automatique, l'UE est prévu pour maintenir désactivé le commutateur de connexion automatique;
l'UE est prévu pour envoyer au SCM un ensemble d'identifiants WiFi, les identifiants WiFi étant connus et mémorisés dans l'UE, et une synchronisation avec la SDP est demandée ;
le SCM est prévu pour une synchronisation avec la SDP, par mémorisation de nouveaux identifiants WiFi ou mise à jour de l'ensemble d'identifiants WiFi tels que reçus par l'UE et pour récupérer l'ensemble d'identifiants WiFi synchronisé ;
le SCM est prévu pour envoyer à l'UE l'ensemble d'identifiants WiFi synchronisé ;
l'UE est prévu pour recevoir, mettre à jour et mémoriser, l'ensemble d'identifiants WiFi synchronisé.

5. Système selon la revendication 4, où l'UE et opérateur d'arrière-plan ZTC assistent en outre les fonctions d'externalisation ouverte CS, de base de données de plateforme d'analyse de données réseau NDAP, et d'informations de commande prédictive PS, et où :
l'UE est prévu pour collecter et compiler des données de réseaux WiFi et/ou cellulaires au niveau de l'emplacement actuel de l'UE, les données comprenant un paramètre, ou une combinaison des paramètres de qualité suivants associés aux réseaux WiFi et/ou cellulaires : intensité de signal, performance de réseau actuelle, estimation d'expérience utilisateur actuelle ;
l'UE est prévu pour envoyer à la CS les données compilées ;
la CS est prévue pour mettre à jour sur la base de données NDAP les données compilées telles que reçues par l'UE ;
la CS est prévue pour envoyer à l'UE un accusé de réception indiquant si la mise à jour des données a réussi ;
l'UE est prévu pour contrôler si des informations PS valides sont localement disponibles, les informations PS comprenant un temporisateur de validité indiquant un temps jusqu'où les informations PS sont valides pour un emplacement et/ou une zone spécifiques, et
dans le cas où aucune information PS valide n'est présentée au niveau de l'UE :
l'UE est prévu pour demander de nouvelles informations PS à la fonction PS ;
la fonction PS est prévue pour accéder à la base de données NDAP, récupérer et compiler un ensemble d'informations PS associé à l'emplacement et/ou à la zone actuels de l'UE, l'ensemble d'informations PS contenant une liste de réseaux WiFi et/ou cellulaires avec des prédictions de paramètres de qualité correspondantes et un temporisateur de validité associé, respectivement,
la fonction PS est prévue pour renvoyer à l'UE l'ensemble d'informations PS associé à l'emplacement et/ou la zone actuels de l'UE ;
l'UE est prévu pour mémoriser l'ensemble d'informations PS et pour vérifier si les réseaux cellulaires et/ou WiFi où l'UE est actuellement enregistrée sont optimaux, un réseau étant considéré optimal si aucun autre réseau n'est présenté avec de meilleures prédictions de paramètres de qualité ;
et, si le ou les réseaux cellulaires et/ou Wifi actuels ne sont pas optimaux, l'UE est prévu pour exécuter un enregistrement ou des enregistrements de nouveau réseau cellulaire et/ou WiFi sur le réseau avec les meilleures prédictions de paramètres de qualité.

6. Système selon la revendication 5, où, si un enregistrement ou des enregistrements de nouveau réseau cellulaire et/ou WiFi sont exécutés :
l'UE est prévu pour exploiter les informations PS mémorisées et l'ensemble d'identifiants WiFi afin de décider de l'enregistrement ou des enregistrements à effectuer ;
l'UE est prévu pour effectuer sur la CS une mise à jour de données de performance de réseau actuelle, l'UE étant prévu pour :
collecter et compiler, au niveau de l'emplacement actuel de l'UE, des données de réseaux WiFi et/ou cellulaires, les données comprenant un paramètre, ou une combinaison des paramètres de qualité suivants associés aux réseaux WiFi et/ou cellulaires : intensité de signal, performance de réseau actuelle, estimation d'expérience utilisateur actuelle ;
envoyer les données compilées à la CS ;
la CS étant prévue pour mettre à jour sur la base de données NDAP, les données compilées telles que reçues par l'UE, et pour envoyer à l'UE un accusé de réception indiquant si la mise à jour des données a réussi.
